# EUROPEAN PATENT APPLICATION

(11) **EP 1 657 364 A2**
(43) Date of publication of application: **17.05.2006**
(21) Application number: 05024712.1
(22) Date of filing: 11.11.2005
(51) Int. Cl.: E02B 3/00

(54) **Method for recovering the under water ecosystem of a river**

(30) Priority: 16.11.2004 KR 2004093374
(71) Applicant: Choi, Kuen Ho, Dong-Gu Daejon-si (KR)
(72) Inventor: Choi, Kuen Ho, Dong-Gu Daejon-si (KR)
(74) Representative: Behnisch, Werner

(57) **Abstract**

The present invention relates to a method for recovering an underwater ecosystem of a river. In particular, the method for recovering an underwater ecosystem of a river comprises a first step of constructing an upstream blocking wall at the same level as the bottom of a river such that the bottom of the river is positioned in the same line as upper surfaces of the upstream blocking wall; a second step of constructing a downstream blocking wall at the same level as the bottom of the river at a position spaced apart from the upstream blocking wall by a predetermined distance such that the bottom of the river is positioned in the same line as an upper surface of the downstream blocking wall; and a third step of dredging the bottom of the river in a predetermined depth according to a planned depth of water of the river and constructing a reservoir between the upstream and downstream blocking walls to release various kinds of underwater organisms suitable to regional characteristics, wherein the first to third steps are repeated to form a plurality of pond regions along the river. The method of the present invention further comprises a fourth step of constructing shallow regions for water purification between the plurality of pond regions. Therefore, there are advantages in that the underwater ecosystem of a river can be recovered and maintained healthily and the contamination of river can be prevented through the improvement of natural purification capability of the river, whereby a natural ecosystem including the ecosystem of an existing river can be kept more healthily and the river may be thus easily utilized as a water-friendly space.

## Description

### BACKGROUND OF THE INVENTION

### 1. Field of the Invention

The present invention relates to a method for recovering an underwater ecosystem of a river, and more particularly, to a method for recovering an underwater ecosystem of a river, wherein a plurality of pond regions, each of which is composed of upstream and downstream blocking walls installed at the same height as the bottom of the river and a reservoir constructed in a certain depth between the upstream and downstream blocking walls, are formed and shallow regions are then formed between the adjacent pond regions to establish a basic environment for the restoration of underwater ecosystem so that the underwater ecosystem can be restored from the basic environment.

### 2. Description of the Related Art

A conventional water utilization and control method has been developed to obtain necessary water resources. In this method, various structures such as a multi-purpose dam, a simple concrete dam or bank generally referred to as a small- or medium-sized dam, and a rubber dam are installed across a river.

The aforementioned structures across a river are useful for human beings in terms of security of water resource, power generation and the like. However, such structures cut off water flow, so that various kinds of fishes that have a habit to seek for a place suitable for themselves cannot move, i.e. can be isolated, which results in the inbreeding and thus significant decrease in the number of fishes. In addition, the number of animals who cat the fishes has no choice but to decrease due to the break of food chain, thereby causing imbalance of the ecosystem.

In addition, the aforementioned structures have caused many environmental problems due to the break and destruction of an ecosystem. In particular, an underwater dam hinders fishes from migrating and thus gives serious damage to an ecosystem of the underwater life. In addition, after a certain period of time has been elapsed, water cannot be further stored due to stones, sands and soils carried upstream and piled up thereto, as well as the bottom of the river are unnecessarily raised.

### SUMMARY OF THE INVENTION

The present invention is conceived to solve the problems in the prior art. Accordingly, an object of the present invention is to provide a method for recovering an underwater ecosystem of a river, in which deep pond regions and shallow regions are alternately constructed in order not to cut off the waterway of river, so that various underwater life can migrate upstream or downstream to prevent their inbreeding, various inhabitation environments can be constructed to keep the diversity of species, and the ecosystem can be recovered to construct a healthy ecosystem of a river having a good food chain.

According to an aspect of the present invention for achieving the object, there is provided a method for recovering an underwater ecosystem of a river, which comprises a first step of constructing an upstream blocking wall at the same level as the bottom of a river such that the bottom of the river is positioned in the same line as upper surfaces of the upstream blocking wall; a second step of constructing a downstream blocking wall at the same level as the bottom of the river at a position spaced apart from the upstream blocking wall by a predetermined distance such that the bottom of the river is positioned in the same line as an upper surface of the downstream blocking wall; and a third step of dredging the bottom of the river in a predetermined depth according to a planned depth of water of the river and constructing a reservoir between the upstream and downstream blocking walls to release various kinds of underwater organisms suitable to regional characteristics, wherein the first to third steps are repeated to form a plurality of pond regions along the river. The method of the present invention further comprises a fourth step of constructing shallow regions for water purification between the plurality of pond regions.

### BRIEF DESCRIPTION OF THE DRAWINGS

The above and other objects and aspects of the present invention will become apparent from the following description of embodiments with reference to the accompanying drawing in which:
Fig. I is a plan view illustrating a method for recovering an underwater ecosystem of a river according to an embodiment of the present invention;
Fig. 2 is a sectional view taken along line a-a of Fig. 1 for illustrating the configuration and operation of the method for recovering an underwater ecosystem of a river according to the present invention;
Fig. 3 is a sectional view taken along line b-b of Fig. 1 for illustrating a downstream blocking wall for use in the method for recovering an underwater ecosystem of a river according to the present invention;
Fig. 4 is a sectional view taken along line c-c of Fig. 1 for illustrating an upstream blocking wall for use in the method for recovering an underwater ecosystem of a river according to the present invention;
Fig. 5 is a reference view showing a level of water of the upstream and downstream blocking walls at a dry season when using the method for recovering an underwater ecosystem of a river according to one embodiment of the present invention;
Fig. 6 is a reference view showing a level of water of the upstream and downstream blocking walls at a normal season when using the method for recovering an underwater ecosystem of a river according to one embodiment of the present invention;
Fig. 7 is a side sectional view illustrating a construction process employed in the method for recovering an underwater ecosystem of a river according to one embodiment of the present invention;
Fig. 8 is a side sectional view illustrating a process of constructing shallow regions employed in the method for recovering an underwater ecosystem of a river according to one embodiment of the present invention;
Fig. 9 is a reference view showing a meandering river and sandbar formed in various ways at the shallow regions of Fig. 8;
Fig. 10 is a reference view illustrating a process of constructing an artificial island (reef) in a reservoir among the method for recovering an underwater ecosystem of a river according to one embodiment of the present invention;
Fig. 11 is a plan view illustrating a method for recovering an underwater ecosystem of a river according to another embodiment of the present invention; and
Fig. 12 is a diagram showing an ideal underwater ecosystem of a river which is pursued by the method for recovering an underwater ecosystem of a river according to one embodiment of the present invention.

### DESCRIPTION OF THE PREFERRED EMBODIMENT

Hereinafter, a method for recovering an underwater ecosystem according to an embodiment of the present invention will be described in detail with reference to the accompanying drawings.

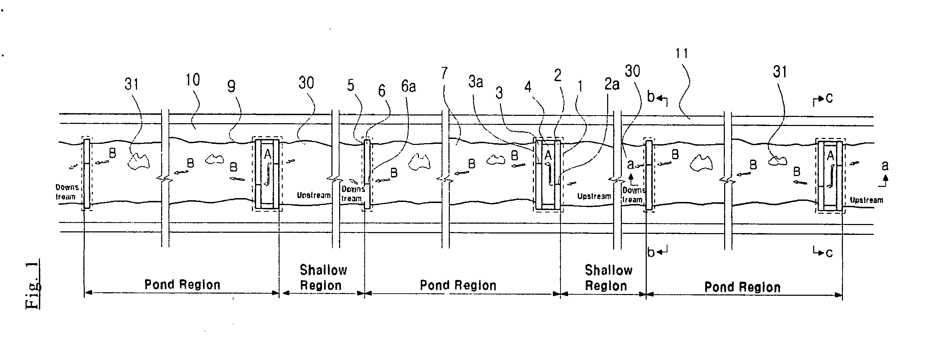

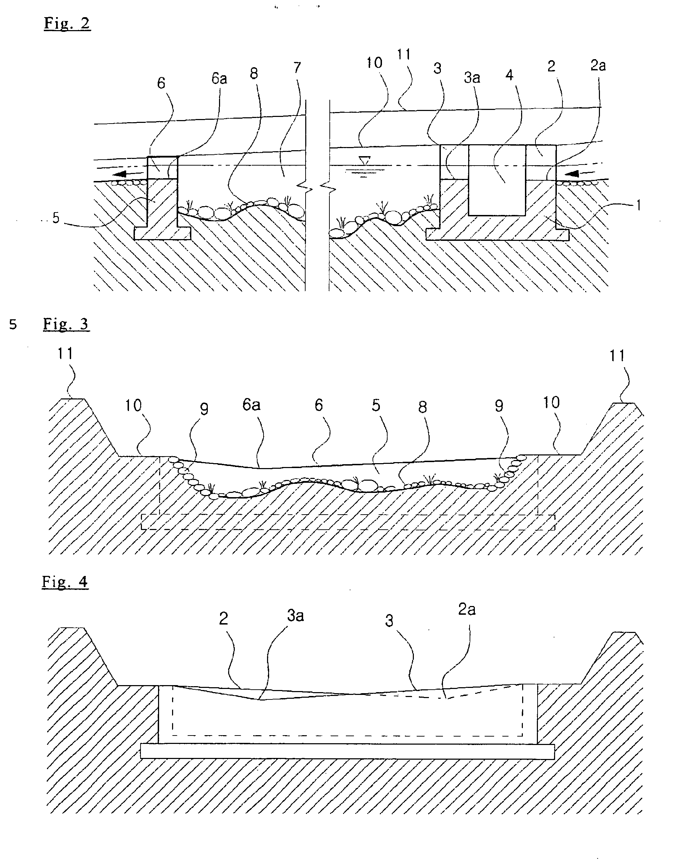

Fig. 1 is a plan view illustrating a method for recovering an underwater ecosystem of a river according to an embodiment of the present invention, Fig. 2 is a sectional view taken along line a-a of Fig. 1 for illustrating the configuration and operation of the method for recovering an underwater ecosystem of a river according to the present invention, Fig. 3 is a sectional view taken along line b-b of Fig. 1 for illustrating a downstream blocking wall for use in the method for recovering an underwater ecosystem of a river according to the present invention, and Fig. 4 is a sectional view taken along line c-c of Fig. 1 for illustrating an upstream blocking wall for use in the method for recovering an underwater ecosystem of a river according to the present invention.

The method for recovering an underwater ecosystem according to an embodiment of the present invention comprises a first step of constructing an upstream blocking wall 1 at the same level as the bottom of a river such that the bottom of the river is positioned in the same line as upper surfaces 2 and 3 of the upstream blocking wall 1, a second step of constructing a downstream blocking wall 5 at the same level as the bottom of the river at a position spaced apart from the upstream blocking wall 1 by a predetermined distance such that the bottom of the river is positioned in the same line as an upper surface 6 of the downstream blocking wall 5, and a third step of dredging the bottom of the river in a predetermined depth according to a planned depth of water of the river and constructing a reservoir 7 between the upstream and downstream blocking walls 1 and 5 to release various kinds of underwater organisms suitable to regional characteristics. By repeating the above processes, a plurality of pond regions can be formed along the river.

Then, shallow regions 30 for water purification are constructed between the plurality of pond regions (a fourth step of the method of the present invention), whereby a basic environment for recovering an underwater ecosystem of a river can be completely established.

Now, a process of constructing the upstream blocking wall 1 in the first step will be described in detail with reference to the accompanying drawings.

First, the upstream blocking wall 1 is configured in such a manner that the upper surfaces 2 and 3 are constructed at the same level as the bottom of the river and an upstream blocking wall recess 4 is formed between the upper surfaces 2 and 3 of the upstream blocking wall 1, as shown in Figs. 1 and 2, such that earth and sand introduced upstream of the river are deposited according to the difference of specific gravity. Further, the upper surfaces 2 and 3 of the upstream blocking wall 1 are formed in a V shape to maintain the level of water such that big and small fishes can migrate in the dry season. Furthermore, the lowermost points 2a and 3a of the V-shaped upper surfaces of the upstream blocking wall are constructed to alternate with each other, as shown in Figs. 1 and 4, such that the earth and sand introduced upstream are evenly deposited in the upstream blocking wall recess 4.

Accordingly, it can be well understood that a water flow A over the upstream blocking wall 1 has a zigzag pattern, as shown in Fig. 1.

Further, the upstream blocking wall 1 is preferably constructed as follows. A width of the upper surfaces 2 and 3 is 4 to 6 meters such that heavy machinery such as an excavator can be operated thereon when dredging the earth and sand deposited in the upstream blocking wall recess 4, a depth of the upstream blocking wall recess 4 is 4 to 5 meters such that the earth and sand can be stored therein to the utmost, and a width of the upstream blocking wall recess 4 is 6 to 10 meters such that heavy machinery can be operated on both sides of the upper surfaces 2 and 3. However, since the conditions of a target river vary according to the rivers, it is apparent that the above dimensions can be changed without being limited thereto.

In addition, in an area where a river has a steep slope or contains a lot of sands and small gravels, at least one upstream blocking wall recess 4 may be further formed in the upper surfaces 2 and 3 of the upstream blocking wall 1, thereby effectively preventing the earth and sand from filling up the reservoir 7.

Furthermore, the upstream blocking wall 1 may be constructed such that one or more lowermost points 2a and 3a of the V-shaped upper surfaces of the upstream blocking wall 1 alternates with one another according to the conditions of the target river.

Moreover, the V-shaped upper surface of the upstream blocking wall is preferably formed to have a slope of 1/100 to 5/100 from the horizontal surface but is not specifically limited thereto. Any slope can be satisfied so long as the heavy machinery can be smoothly operated on the V-shaped upper surface of the upstream blocking wall.

Meanwhile, a process of constructing the downstream blocking wall 5 in the second step will be described in detail with reference to the accompanying drawings.

First, the downstream blocking wall 5 is configured in such a manner that the upper surface 6 is constructed at the same level as the bottom of the river and has a V shape, as shown in Figs. 1 to 6, to maintain the level of water such that big and small fishes can migrate in the dry season. At this time, a width of the V shaped upper surface 6 of the downstream blocking wall 5 on which the lowermost point 6a is formed is preferably 4 to 6 meters such that the repair and maintenance by heavy machinery can be made. However, since the conditions of a target river vary according to the rivers as in the aforementioned upper surfaces 2 and 3 of the upstream blocking wall, it is apparent that the above dimensions can be changed without being limited thereto.

Furthermore, the downstream blocking wall 5 may be constructed such that one or more lowermost points 6a of the V-shaped upper surfaces of the downstream blocking wall 5 alternates with one another according to the conditions of the target river.

Moreover, similarly to the slope of the lowermost points 2a and 3a of the V-shaped upper surface of the upstream blocking wall as described above, the V-shaped upper surface of the downstream blocking wall is preferably formed to have a slope of 1/100 to 5/100 from the horizontal surface but is not specifically limited thereto. Any slope can be satisfied so long as the heavy machinery can be smoothly operated on the V-shaped upper surface of the upstream blocking wall.

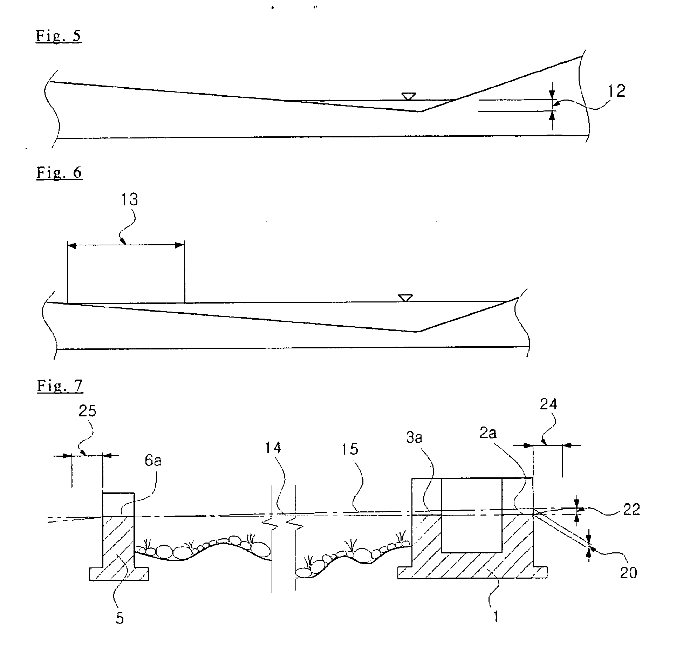

Fig. 7 is a side sectional view illustrating a construction process employed in the method for recovering an underwater ecosystem of a river according to one embodiment of the present invention. Now, a process of setting a constructional standard horizontal line of the upstream and downstream blocking walls 1 and 5 and constructing the blocking walls based on the set line will be described in detail with reference to Fig. 7.

First, a slope line 15 of lowermost points on the bottom of the existing river at positions where the upstream and downstream blocking walls 1 and 5 will be constructed is measured by means of the survey.

Then, a constructional standard horizontal line 14 of the present invention is set by drawing a line horizontally form a point where a perpendicular line at a position of the downstream blocking wall 5 meets the slope line 15 of the lowermost point of the bottom of the existing river.

At this time, it is preferred that the lowermost point 6a of the upper surface of the downstream blocking wall 5 be coincident with the set constructional standard horizontal line 14, a finish region 25 downstream of the downstream blocking wall be constructed by piling up natural stones thereon, the lowermost points 2a and 3a of the upper surface of the upstream blocking wall 1 be constructed to alternate with each other based on the set construction standard horizontal line 14 as shown in Fig. 4, and a slope 22 upstream of the upstream blocking wall be 1/20 to 1/50 at a finish region 24 upstream of the upstream blocking wall due to the difference of sea level 20 between the slope line 15 of the lowermost point of the bottom of the existing river and the constructional standard horizontal line 14.

A process of constructing the reservoir 7, in the third step of the method of the present invention, between the upstream and downstream blocking walls 1 and 5 after completing the construction of the upstream and downstream blocking wall 1 and 5 as mentioned above will be described in detail.

First, the reservoir 7 is a place where various kinds of fishes inhabit and winter, and a very important place needed for the survival of various kinds of underwater organisms. Since the kinds of fishes living in a deep region, a shallow region, a waterweed region and a gravelly field are different from one another, the reservoir 7 is dredged curvedly in various depths of 1 to 4 meters from the bottom of the river between the upstream and downstream blocking walls 1 and 5 to provide a variety of inhabitation environments. The bottom 8 of the reservoir is formed in this way.

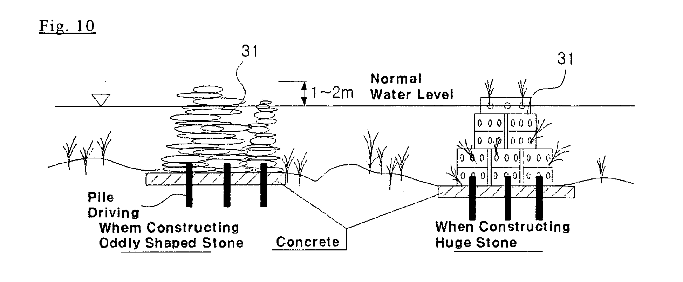

At this time, after the bottom 8 of the reservoir has been constructed as described above, large locks and gravels are laid on the bottom 8 of the reservoir and then submerged plants such as *Hydrilla verticillata, Vallisneria asiatica, Potamogeton malaianus var. latifolius, Trapa japonica, Potamogeton crispus and Myriophyllum verticillatum* are sporadically planted, and artificial islands 31 are constructed on the bottom of the reservoir to have a reef region and waterweed region, as shown in Fig. 10, to establish a basic environment that may be spontaneously recovered.

Here, a process of constructing the artificial island (reef) 31 formed in the reservoir 7 will be explained, as follows.

The artificial island 31 is basically constructed by using large locks or natural stones protruding from on the target river. If there are no suitable locks or stones, oddly shaped stones or huge stones may be used for this construction. After the artificial island has been constructed, piles are driven into the bottom of the reservoir and holes are then perforated into a lower portion of the artificial island 31 after the concrete casting and the piles are finally fitted in the holes, in order to prevent the artificial island 31 from being swept due to a heavy rain such as a flood. Further, in a case where the huge stones are constructed, bolts and nuts may be used to couple the huge stones integrally with each other.

In addition, in order to cause the reservoir 7 to be curved during the dredging, prevent the earth and sand from being swept due to the water flow and recover aquatic plants damaged during the dredging, the side surface 9 of the reservoir is constructed in such a manner that ecological blocks and natural stones are piled up thereon and aquatic plants such as reeds, lotus flowers, water lilies, cattails, irises and parsley are sporadically planted.

Furthermore, as shown in Fig. 1, a water flow B in the reservoir 7 is uniformly distributed due to the lowermost points 3a and 6a of the upper surfaces of the upstream and downstream blocking walls which are respectively formed to alternate with each other on the upper surfaces 3 and 6 of the upstream and downstream blocking walls, so that the water flows diagonally in the reservoir.

Fig. 5 is a reference view showing a water level of the upstream and downstream blocking walls at the dry season when using the method for recovering an underwater ecosystem of a river according to one embodiment of the present invention. In this figure, the level of water 12 of upstream and downstream blocking walls 1 and 5 at which fishes can freely migrate even in the dry season is shown. Fig. 6 is a reference view showing a level of water of the upstream and downstream blocking walls at the normal season when using the method for recovering an underwater ecosystem of a river according to one embodiment of the present invention. In this figure, it is shown that the levels of water are different at the lowermost point and edges when water flows over the V-shaped upper surface such that small fishes can freely migrate upstream and downstream through the edges 13 where the water flow is not strong.

By constructing the upstream blocking wall I, the downstream blocking wall 5 and the reservoir 7 as described above, one pond region is formed. In the present invention, a plurality of the pond regions are formed according to the conditions and characteristics of a target river.

Meanwhile, a process of constructing the shallow regions 30 between the pond regions as stated in the fourth step will be explained in detail with reference to the accompanying drawings.

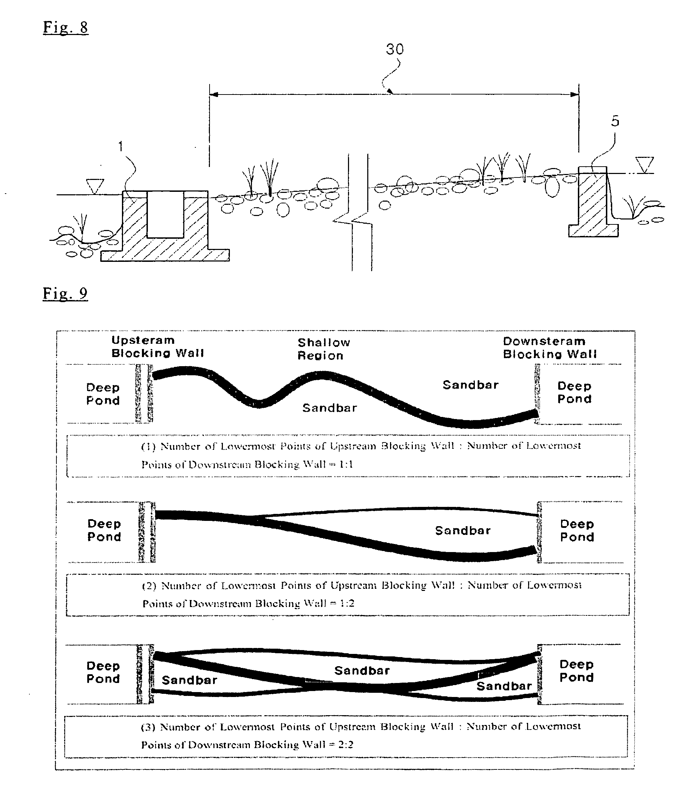

Fig. 8 is a side sectional view illustrating a process of constructing shallow regions employed in the method for recovering an underwater ecosystem of a river according to one embodiment of the present invention, and Fig. 9 is a reference view showing a meandering river and sandbar formed in various ways at the shallow regions of Fig. 8.

The shallow region 30 between the pond regions is constructed in such a manner that it becomes a natural meandering river by means of the alternating lowermost points 3a and 6a formed respectively on the upper surfaces 3 and 6 of the upstream and downstream blocking walls 5 and 6 and the sandbars are also easily generated.

In addition, the waterside (river bed) 10 is constructed by using natural stones with a size of 50 millimeters or more selected from aggregates collected when constructing the reservoir 7. An irregular bottom of the shallow region 30 is also preferably constructed by using natural stones with a size of 50 millimeters or more selected from the aggregates collected while constructing the reservoir 7. In addition, shallow ponds are formed at some places in the middle of the shallow region 30. Furthermore, the shallow region 30 is preferably constructed in a gentle slope in order to ensure the migration of a variety of underwater organisms such as big or small fishes and aquatic insects.

The wavy meandering river in the shallow region 30 is one of main factors for supplying oxygen to the river, and the sandbar also provides a place where a variety of underwater plants can be reared. Further, if the underwater plants grow up affluently, they become places where birds and mammals inhabit and shelter or places where aquatic insects are working, resting and hiding, whereby the food chain is formed again.

In addition, a variety of multiple meandering rivers can be naturally constructed in the shallow region 30 according to the number of the alternating lowermost points 3a and 6a formed respectively on the upper surfaces 3 and 6 of the upstream and downstream blocking walls. Moreover, shallow ponds may be constructed at some places in the middle of the shallow regions.

Furthermore, sandbars are naturally generated when a river becomes a meandering river (particularly, after a flood), and they are repeatedly created and vanished. Thus, any artificial construction of sandbars may cause disturbance to the river, thereby giving serious burdens on the ecosystem. In this respect, since the present invention allows the sandbars to be created and/or vanished under the charge of the nature after the construction thereof, the destruction of the ecosystem due to the disturbance of the river caused by the shallow region 30 can be prevented.

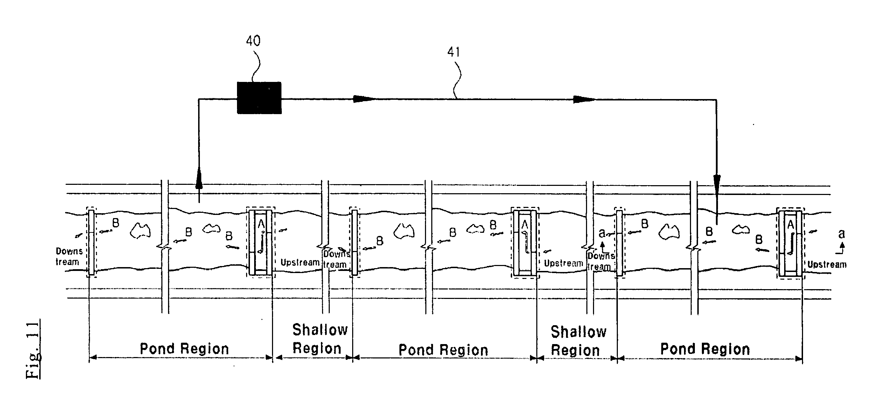

Fig. 11 is a plan view illustrating a method for recovering an underwater ecosystem of a river according to another embodiment of the present invention.

In this embodiment, water can be pumped from an arbitrary downstream reservoir to an arbitrary upstream reservoir by using a pump 40 and pump line 41 even in the dry season when water flow is not smooth in the river, so that the water can flow smoothly and continuously in the river. Accordingly, the underwater ecosystem of a river can be maintained even in the dry season by using the method for recovering the ecosystem according to the present invention.

Alternatively, the method for recovering an underwater ecosystem of a river according to this embodiment of the present invention can use at least one pipeline (not shown), in the dry season, which is buried across an arbitrary shallow region 30 to penetrate through an arbitrary downstream blocking wall 5 positioned at the upstream side of the river and a neighboring upstream blocking wall I positioned at the downstream side of the river.

Here, both ends of the pipeline may be further provided with an opening/closing means that can be automatically opened or closed by means of the manipulation of an operator.

This configuration is very useful in the dry season, because water may be pumped up through the pipeline even when there is no fresh water in a reservoir 7 formed at the downstream side of an arbitrary upstream blocking wall 1.

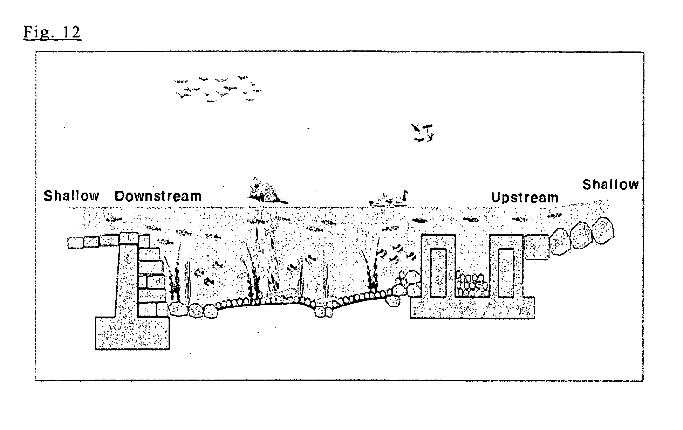

Fig. 12 is a reference diagram showing an ideal underwater ecosystem of a river which is pursued by the method for recovering an underwater ecosystem of a river according to the embodiment of the present invention.

According to the present invention as described above, the shallow regions 30 are formed between a plurality of the pond regions each of which includes the upstream blocking wall 1, the downstream blocking wall 5 and the reservoir 7, so that a basic environment needed for recovering an underwater ecosystem of a river can be established, the ecosystem of the river can be naturally recovered and maintained healthy based on the basic environment, and the natural ecosystem connected through the food chain to an existing river can also be recovered healthily.

Meanwhile, the method for recovering an underwater ecosystem of a river according to the present invention may be modified in various ways depending on the topography, characteristics and development plans of the river. Hereinafter, the method for recovering an underwater ecosystem of a river according to a modified embodiment of the present invention will be explained. However, the same components as in the method for recovering an underwater ecosystem of a river according to the previous embodiment of the present invention are designated by the same reference numerals, and repeated and unnecessary descriptions on the same components will be omitted herein.

First, in a method for recovering an underwater ecosystem of a river according to a first modified embodiment of the present invention, only one pond region is constructed using the method for recovering an underwater ecosystem of a river according to the previous embodiment of the present invention, depending on the topography, characteristics and development plans of a river. The method for recovering an underwater ecosystem according to the first modified embodiment of the present invention comprises a first step of constructing an upstream blocking wall 1 at the same level as the bottom of a river such that the bottom of the river is positioned in the same line as upper surfaces 2 and 3 of the upstream blocking wall 1, a second step of constructing a downstream blocking wall 5 at the same level as the bottom of the river at a position spaced apart from the upstream blocking wall 1 by a predetermined distance such that the bottom of the river is positioned in the same line as an upper surface 6 of the downstream blocking wall 5, and a third step of constructing a reservoir 7 between the upstream and downstream blocking walls 1 and 5 in a predetermined depth according to a planned depth of water of the river in order to release various kinds of underwater organisms suitable to regional characteristics.

Further, a method for recovering an underwater ecosystem of a river according to a second modified embodiment of the present invention comprises the steps of forming an upstream blocking wall recess 4 in which the earth and sand introduced upstream of the river are deposited by means of its difference of a specific gravity, depending on the topography, characteristics and development plans of a river; and constructing only an upstream blocking wall 1 at the same level as the bottom of a river wherein the upstream blocking wall 1 includes one or more upper surfaces 2 and 3 which are positioned at both sides of the recess 4 in the same line as the bottom of the river and have enough width for heavy machinery to operate thereon during the dredging.

Furthermore, in a method for recovering an underwater ecosystem of a river according to a third modified embodiment of the present invention, an upstream blocking wall 1 is removed from one pond region constructed using the method for recovering an underwater ecosystem of a river according to the previous embodiment of the present invention, depending on the topography, characteristics and development plans of a river. The method for recovering an underwater ecosystem according to the third modified embodiment of the present invention comprises the steps of dredging the bottom of the river in a predetermined depth according to a planned depth of water of the river and constructing a reservoir 7 at an arbitrary position upstream of the river in order to release various kinds of underwater organisms suitable to regional characteristics; and constructing a downstream blocking wall 5 at the same level as the bottom of the river at a position downstream of the river in which the reservoir 7 is constructed, wherein the downstream blocking wall 5 includes an upper surface 6 with enough width for heavy machinery to operate thereon for the repair and maintenance.

The method for recovering an underwater ecosystem of a river according to the present invention as described above is not limited to the above modified embodiments, but one or more combinations of the modified embodiments can be applied to the present invention in various ways without departing from the technical spirit of the invention, depending on the topography, characteristics and development plans of a river.

In the method for recovering an underwater ecosystem of a river according to the present invention as described above, a plurality of pond regions, each of which is composed of upstream and downstream blocking walls installed at the same height as the bottom of the river and a reservoir constructed in a certain depth between the upstream and downstream blocking walls, are formed and shallow regions are then formed between the adjacent pond regions to establish a basic environment for the restoration of underwater ecosystem such that the underwater ecosystem can be restored from the basic environment. Therefore, there are advantages in that the underwater ecosystem of a river can be recovered and maintained healthily and the contamination of river can be prevented through the improvement of natural purification capability of the river, whereby a natural ecosystem including the ecosystem of an existing river can be kept more healthily and the river may be thus easily utilized as a water-friendly space.

Further, since the depth of water is kept constantly in a state where a waterway is not interrupted and various kinds of fishes can freely migrate upstream and downstream along the waterway, the interbreeding of the fishes is prevented and thus the fishes are abundant in the river. Further, animals connected to the fishes through the food chain can flourish, and thus, the ecosystem can be maintained stably.

Furthermore, since a large amount of water can be stored in the bottom of the river, the water can be used to do farming in the dry season. Moreover, since the structures constructed by the present invention are installed at the same level as the bottom of a river, they do not hinder the water flow during a flood such that the river does not overflow.

In addition, the structures constructed by the method of the present invention can be may be easily repaired, maintained and managed, and thus, the relevant maintenance costs cam be reduced.

## Claims

1. A method for recovering an underwater ecosystem of a river, comprising:
a first step of constructing an upstream blocking wall at the same level as the bottom of a river such that the bottom of the river is positioned in the same line as upper surfaces of the upstream blocking wall;
a second step of constructing a downstream blocking wall at the same level as the bottom of the river at a position spaced apart from the upstream blocking wall by a predetermined distance such that the bottom of the river is positioned in the same line as an upper surface of the downstream blocking wall; and
a third step of dredging the bottom of the river in a predetermined depth according to a planned depth of water of the river and constructing a reservoir between the upstream and downstream blocking walls to release various kinds of underwater organisms suitable to regional characteristics,
wherein the first to third steps are repeated to form a plurality of pond regions along the river,
the method further comprising a fourth step of constructing shallow regions for water purification between the plurality of pond regions.

2. The method as claimed in claim 1, wherein in the first step of constructing the upstream blocking wall, an upstream blocking wall recess is formed between the upper surfaces of the upstream blocking wall to allow earth and sand introduced upstream of the river to be deposited due to difference of a specific gravity, the upper surfaces of the upstream blocking wall are formed in a V shape to maintain a level of water to allow big or small fishes to migrate in a dry season, and lowermost points of the V-shaped upper surfaces of the upstream blocking wall are constructed to alternate with each other such that the earth and sand introduced upstream of the river are evenly deposited in the upstream blocking wall recess.

3. The method as claimed in claim 1 or 2, wherein in an area where a river has a steep slope or contains a lot of sands and small gravels, at least one upstream blocking wall recess is formed in the upper surfaces of the upstream blocking wall.

4. The method as claimed in claim 1 or 2, wherein one or more lowermost points of the V-shaped upper surfaces of the upstream blocking wall are formed on the upstream blocking wall to alternate with one another according to conditions of the river.

5. The method as claimed in claim 1 or 2, wherein a width of the upper surface of the upstream blocking wall is 4 to 6 meters such that heavy machinery can be operated thereon when dredging the bottom of the upstream blocking wall recess, a depth of the upstream blocking wall recess 4 is 4 to 5 meters such that the earth and sand can be stored therein to the utmost, and a width of the upstream blocking wall recess 4 is 6 to 10 meters such that heavy machinery can be operated on both sides of the upper surfaces of the upstream blocking wall.

6. The method as claimed in claim 1 or 2, wherein the V-shaped upper surface of the upstream blocking wall is formed to have a slope of 1/100 to 5/100 from the horizontal surface such that heavy machinery can be operated thereon.

7. The method as claimed in claim 1, wherein in the second step of constructing the downstream blocking wall, the upper surface of the downstream blocking wall is formed in a V shape to maintain a level of water to allow big or small fishes to migrate in a dry season maintain, and a width of the V-shaped upper surface of the downstream blocking wall on which the lowermost point is formed is preferably 4 to 6 meters such that repair and maintenance by heavy machinery can be made.

8. The method as claimed in claim 1 or 7, wherein one or more lowermost points of the V-shaped upper surfaces of the downstream blocking wall are formed on the downstream blocking wall to alternate with one another according to conditions of the river.

9. The method as claimed in claim 1 or 7, wherein the V-shaped upper surface of the downstream blocking wall is formed to have a slope of 1/100 to 5/100 from the horizontal surface such that heavy machinery can be operated thereon

10. The method as claimed in claim 1, wherein the third step of constructing the reservoir comprises the steps of dredging the reservoir curvedly in various depths of I to 4 meters from the bottom of the river to form the bottom of the reservoir between the upstream and downstream blocking walls, laying large locks and gravels on the bottom of the reservoir and then sporadically planting submerged plants such as *Hydrilla verticallata Vallisneria asiatica, Potamogeton malaianus var. latifoliu*s, *Trapa japonica, Potamogelon crispus and Myriophyllum verticillatum* constructing artificial islands such as reef and waterweed regions on the bottom of the reservoir, curving the sides of reservoir when dredging the bottom of the reservoir and piling up ecological blocks and natural stones on sides of the reservoir to prevent the earth and sand from being swept due to water flow, and sporadically planting aquatic plants such as reeds, lotus flowers, water lilies, cattails, irises and parsley to recover the aquatic plants damaged during the dredging.

11. The method as claimed in claim 1, wherein in the fourth step of constructing the shallow region, the shallow region becomes a natural meandering river by means of alternating lowermost points formed respectively on the upper surfaces of the upstream and downstream blocking walls and sandbars are easily generated, a space between watersides and an irregular bottom of the shallow region are constructed by using natural stones with a size of 50 millimeters or more selected from aggregates collected when constructing the reservoir, shallow ponds are formed at some places in the middle of the shallow region, and the shallow region is constructed in a gentle slope to ensure the migration of a variety of underwater organisms such as big or small fishes and aquatic insects.

12. The method as claimed in claim 1, wherein when the upstream and downstream blocking walls are constructed, a slope line of a lowermost point on the bottom of an existing river at positions where the upstream and downstream blocking walls are to be constructed is measured, a constructional standard horizontal line is then set by drawing a line horizontally form a point where a perpendicular line at a position of the downstream blocking wall meets the slope line of the lowermost point of the bottom of the existing river, the downstream blocking wall is constructed such that the lowermost point of the upper surface thereof is coincident with the set constructional standard horizontal line, a finish region downstream of the downstream blocking wall is constructed by piling up natural stones thereon, the upstream blocking wall is constructed such that the lowermost points of the upper surface thereof is coincident with the set construction standard horizontal line, and an upstream slope of the upstream blocking wall is 1/20 to 1/50 at a finish region upstream of the upstream blocking wall due to difference of sea level between the slope line of the lowermost point of the bottom of the existing river and the constructional standard horizontal line.

13. The method as claimed in claim 1, wherein a pump means is further used in the method to pump up water from an arbitrary downstream reservoir to an arbitrary upstream reservoir such that water can flow continuously in the river even in the dry season.

14. The method as claimed in claim 1, wherein at least one pipeline buried across an arbitrary shallow region is used in the method to penetrate through an arbitrary downstream blocking wall positioned at the upstream side of the river and a neighboring upstream blocking wall positioned at the downstream side of the river.

15. A method for recovering an underwater ecosystem of a river, comprising:
a first step of constructing an upstream blocking wall at the same level as the bottom of a river such that the bottom of the river is positioned in the same line as upper surfaces of the upstream blocking wall;
a second step of constructing a downstream blocking wall at the same level as the bottom of the river at a position spaced apart from the upstream blocking wall by a predetermined distance such that the bottom of the river is positioned in the same line as an upper surface of the downstream blocking wall; and
a third step of dredging the bottom of the river in a predetermined depth according to a planned depth of water of the river and constructing a reservoir between the upstream and downstream blocking walls to release various kinds of underwater organisms suitable to regional characteristics.

16. A method for recovering an underwater ecosystem of a river, comprising the steps of:
forming an upstream blocking wall recess in which earth and sand introduced upstream of the river are deposited by means of its difference of a specific gravity; and
constructing an upstream blocking wall at the same level as the bottom of a river, the upstream blocking wall including one or more upper surfaces which are positioned at both sides of the upstream blocking wall recess in the same line as the bottom of the river and have enough width for heavy machinery to operate thereon during the dredging.

17. A method for recovering an underwater ecosystem of a river, comprising the steps of:
dredging the bottom of a river in a predetermined depth according to a planned depth of water of the river and constructing a reservoir at an arbitrary position upstream of the river to release various kinds of underwater organisms suitable to regional characteristics; and
constructing a downstream blocking wall at the same level as the bottom of the river at a position downstream of the river in which the reservoir is constructed, the downstream blocking wall including an upper surface with enough width for heavy machinery to operate thereon for repair and maintenance.
